# EUROPEAN PATENT APPLICATION

(11) **EP 4 202 478 A1**
(43) Date of publication of application: **28.06.2023**
(21) Application number: 21217066.6
(22) Date of filing: 22.12.2021
(51) Int. Cl.: G01S 7/481, G01S 17/931, G01S 7/48

(54) **A LIDAR SYSTEM FOR A MOTOR VEHICLE**

(71) Applicant: Veoneer US, LLC, Southfield, MI 48034 (US)
(72) Inventor: Hansson, Peter, 447 37 Vårgårda (SE)
(74) Representative: Müller Verweyen

(57) **Abstract**

The invention relates to a lidar system (10) for a motor vehicle, comprising at least one primary light source (20) adapted to generate at least one primary laser beam (21), transmit optics (11) adapted to emit the at least one primary laser beam (21) into a surrounding of the motor vehicle, receive optics (12) adapted to receive a reflected portion of the at least one primary laser beam, and a sensor (13) adapted to detect the light portion received by the receive optics (12). The primary laser beam (21) has a primary spectral peak (22) in the visible spectrum and the lidar system (10) further comprises at least one secondary light source (30) adapted to generate at least one secondary light beam (31) having at least one secondary spectral peak (32) in the visible spectrum which is different from the primary spectral peak (22), wherein the transmit optics (11) are adapted to emit the at least one secondary light beam (31) into the surrounding of the motor vehicle, wherein the at least one primary light source (20), the at least one secondary light source (30) and the transmit optics (11) are arranged such that the at least one primary laser beam (21) and the at least one secondary light beam (31) overlap and mix to a mix color when viewed from a sufficient distance to the motor vehicle.

## Description

The invention relates to a lidar system for a motor vehicle, comprising at least one light source adapted to generate at least one laser beam, transmit optics adapted to emit the at least one laser beam into a surrounding of the motor vehicle, receive optics adapted to receive a reflected portion of the at least one laser beam, and a sensor adapted to detect the light portion received by the receive optics. The invention further relates to a corresponding method to operate a corresponding lidar system.

Lidar (light detection and ranging) systems generally utilize either visible or invisible laser light for targeting objects in the surrounding in order to determine distances by measuring the time-of-flight of reflected light to the receiver.

Laser light is monochromatic with a narrow bandwidth. Therefore, laser light in the visible range (e.g. red laser light) is of limited use for lidar systems in automotive applications due to the risk of confusion with signal lights such as rear lights of motor vehicles, traffic lights and emergency vehicle lights. Accordingly, the near infrared range (NIR) and/or the short wave infrared range is widely used for lidar systems for motor vehicles.

In general, laser light has the disadvantage that in the allowed laser power is very limited, leading to a limitation of the signal-to-noise ratio (SNR) of lidar systems for motor vehicles.

It is the object of the invention to provide a lidar system for a motor vehicle with an improved signal-to-noise ratio.

The invention solves this problem with the features of the independent claims. A lidar system for a motor vehicle is proposed that comprises at least one primary light source adapted to generate at least one primary laser beam, transmit optics adapted to emit the at least one primary laser beam into a surrounding of the motor vehicle, receive optics adapted to receive a reflected portion of the at least one primary laser beam, and a sensor adapted to detect the light portion received by the receive optics. It is proposed that the primary laser beam has a primary spectral peak in the visible spectrum and the lidar system further comprises at least one secondary light source adapted to generate at least one secondary light beam having at least one secondary spectral peak in the visible spectrum which is different from the primary spectral peak, wherein the transmit optics are adapted to emit the at least one secondary light beam into the surrounding of the motor vehicle, wherein the at least one primary light source, the at least one secondary light source and the transmit optics are arranged such that the at least one primary laser beam and the at least one secondary light beam overlap and mix to a mix color when viewed from a sufficient distance to the motor vehicle.

The primary laser beam generated by the primary light source is used for range finding by the lidar system. Since the primary laser beam is in the visible range, the primary light source can be operated with a shorter wavelength. As a result, a better signal-to-noise ratio can be achieved due to higher sensitivity of various detectors, for example, SiPM detectors.

Light is considered to be visible in the wavelength range or spectrum of 380 nm to 800 nm or 400 nm to 700 nm.

Light generated from the at least one secondary light source is also in the visible range, but as the spectral peaks of the primary light source and the at least one secondary light source differ, the at least one secondary light source can be used to balance the color of the overall light emission of the lidar system in order to have a mix color. In this way, the risk of confusing the light emitted by the lidar system with other lights in a traffic environment can be mitigated due to the color of the emitted light. The mix color perceived by a human eye is different from a primary color corresponding to the primary spectral peak and from a secondary color corresponding to the at least one secondary light beam resp. secondary spectral peak. The perception of the overlap and color of the at least one primary laser beam and the at least one secondary light beam may differ from the physical overlap and mix color at a certain point in time as the average over a period of time is determining the perception of a viewer, where the time period is further preferably shorter than the flicker fusion threshold of a human. The secondary spectral peak of the secondary light source refers to the main spectral peak of the secondary light source.

Therefore, the primary laser beam and the secondary light beam are preferably perceived as one light source and also preferably perceived as one light beam by the human eye. It may be sufficient that the primary laser beam and the secondary light beam are perceived as one light source when viewed from a sufficient distance to the motor vehicle. A sufficient distance is preferably more than 1 m. At closer distances of the viewer to the motor vehicle confusing the viewer becomes more and more unlikely.

The narrow bandwidth of the primary laser beam can therefore be maintained while the color of the primary laser beam is compensated to a mix color. Said narrow bandwidth is beneficial for filtering out optical noise from the surrounding in the receive optics, so that the fraction of light incident on the sensor is dominated by the reflected light of the primary laser beam. Further on, it allows for more precise optical alignment as chromatic dispersion can be neglected in the receive optics.

The sensor of the lidar system is preferably adapted to determine a Time-of-Flight of received reflected light in order to determine a depth information for a certain angle in the field of view. Further on, the at least one primary laser beam is preferably a pulsed laser beam.

Advantageously, the primary light source and the at least one secondary light source are adapted to be controlled independently from each other with regard to power output.

It is further proposed that the mix color is perceived as white light by a human eye with regard to chromaticity.

Light, which is perceived as white or appears white, is used for general lighting and/or head lights of a motor vehicle. Most lidar systems are directed in the forward direction as the head lights, resulting in the avoidance of any problems due to a possible confusion with regard to the color with other signal lights in a traffic environment.

The proposed lidar system could also have a beneficial use case of the function of a head-light respectively a laser head-light with dynamic output.

White light refers to a certain perception of a human eye, which can be achieved through various spectra. The perception of a human eye is for example represented by the color-mapping of the CIE 1931 Standard Observer. For the perception of white light, the spectra respectively color of the at least one secondary light beam is preferably complementary to the color of the at least one primary laser beam.

According to a further development, the at least one primary light source, the at least one secondary light source and the transmit optics are arranged such that the at least one primary laser beam and the at least one secondary light beam have a distance smaller than 50 mm, preferably smaller than 40 mm, further preferably smaller than 30 mm, still further preferably smaller than 20 mm to each other at the exit position of the transmit optics.

Accordingly, the at least one primary laser beam and the at least one secondary light beam advantageously emerge in close proximity to one another from the transmit optics of the lidar system, in particular from the last optical element with respect to the surrounding as the exit position. It is further proposed that the at least one primary laser beam and the at least one secondary light beam emerge through the same optical window or the same optical lens of the transmit optics. This allows a good overlap and facilitates the perception of the lidar system as a single light source when active.

The distance from the at least one secondary light beam to the at least one primary laser beam refers to the distance of the optical axes, respectively. Preferably, said distance is minimized, further preferably reduced to zero. The minimization of the distance or the distance reduced to zero can be achieved with a dichroic mirror, which, for example, can be a hot or cold mirror. In this way, it is possible that the at least one primary light beam and the at least one secondary light beam emerge coaxially from the transmit optics.

According to a further development it is proposed that the at least one primary the light source is adapted to generate a blue primary laser beam, preferably with a primary spectral peak in the wavelength range of 380 nm to 480 nm.

The primary spectral peak is further preferably at 450 nm. Having the primary laser beam in the proposed wavelength range is beneficial for the signal-to-noise as the spectral sensitivity of the sensor of the lidar system, in particular of a SiPM/MPPC sensor, can be highest for blue colors respectively blue wavelengths in the proposed range. Therefore, a stronger signal of the reflected light can be achieved, further improving the signal-to-noise ratio.

It is further proposed that at least one secondary light source is adapted to generate a green secondary light beam, preferably with secondary spectral peak in the wavelength range of 490 nm to 570 nm, and/or at least one secondary light source is adapted to generate a red secondary light beam, preferably with a secondary spectral peak in the wavelength range of 590 nm to 700 nm.

Mixing the proposed green and red secondary light beams with the proposed blue primary laser beam allows a good adjustment for white perception of the emitted light of the lidar system. As all three beams emerge from the transmit optics within a close proximity, the area of the emerging beams of the transmit optics is perceived as white light. Further on, overlapping the blue primary laser beam with green and red secondary light beams enables a good color reproduction so that illuminated objects in the surrounding appear in a more natural way.

According to a further development it is proposed that at least one secondary light source is adapted to generate a yellow secondary light beam, preferably with a secondary spectral peak in the wavelength range of 570 nm to 590 nm.

A yellow secondary light source allows to compensate the blue primary laser beam with just one secondary light beam in order to have a mixed light emission or beam with a color that is perceived as white light by the human eye. As just one secondary light source is needed, cost and complexity of the lidar system can be reduced.

According to a further development, it is proposed that the at least one secondary light source is a LED and/or a laser source, preferably a laser diode or a fiber laser.

A LED is able to deliver a colored light, e.g., green, red, yellow, with high output and at low cost. Therefore, LEDs are able to compensate for the color of the primary laser beam in order to achieve a white perception of the at least one primary laser beam and the at least one secondary light beam.

At least one laser source as the at least one secondary light source preferably generates at least one secondary light beam as a laser beam having a high spatial coherence and very narrow spectrum. This allows to emit the at least one secondary light beam along with the at least one primary laser beam, so that the distance of these beams emerging from the transmit optics can be further reduced, preferably reduced to zero.

It is further proposed that a light shaping element is in the optical path of the at least one secondary light beam. The light shaping element adapts the radiation characteristics of light source, in particular of a LED as a secondary light source, so that a scanning pattern of the lidar system with the primary laser beam is matched. As a result, the transmit optics and the emitted beam of the lidar system is perceived as white light or remains dark from various view angles from outside the motor vehicle. Accordingly, viewing angles of the transmit optics where just the at least one secondary light beam is visible and/or the color of the at least one secondary light beam is perceivable, only, can be avoided.

According to a further development, it is proposed that the at least one primary laser beam and the at least one secondary light beam have a similar, preferably the same, angular intensity.

The proposed similar angular intensity of the at least one primary laser beam and the at least one secondary light beam, which are preferably equal, facilitates a constant white color perception over the complete range of viewing angles. Thus, color shifts in the mix color of the common beam, for example due to relative movement of an observer with regard to the lidar system, can be avoided.

The at least one primary laser beam may be directed in a scanning pattern or emitted as wide diverging laser beam in a short pulse or flash. Preferably, the beam of the primary light source and the at least one secondary light beam of the at least one secondary light source have a similar, preferably the same, angular intensity on average over a time period, where the time period is further preferably shorter than the flicker fusion threshold. Generally, it is not necessary to be achieve the similar or same angular intensity at each point in time as long as it appears steady to the human eye.

According to a further development, it is proposed that the transmit optics are adapted to emerge the at least one primary laser beam and the at least one secondary light beam through different parts of the transmit optics.

In particular at least one secondary light source, e.g. a LED, may be placed beside the exit position of the at least one primary laser beam, in the area of the transmit optics where the primary laser beam emerges into the surrounding. Thus, the at least one primary laser beam and the at least one secondary light beam may not share an optical path and are directed through different parts of the transmit optics. The parts of the transmit optics for the at least one secondary light beam and the area of the transmit optics where the secondary light beams emerge into the surrounding, the respective exit position, can be preferably arranged on one side next to the area for the at least one primary laser beam, or can be preferably arranged on the left and right side, or can be preferably arranged around, for example in a circular arrangement.

In another advantageous embodiment, it is proposed that the transmit optics are adapted to emerge the at least one primary laser beam and the at least one secondary light beam through the same parts of the transmit optics. This can be achieved e.g., with a dichroic mirror, which could be used to make in particular a LED as at least one secondary light source or beam coaxial with the at least one primary laser beam.

According to a further development, the lidar system comprises a scanning mechanism which is adapted to redirect the at least one primary laser beam and/or the at least one secondary light beam.

The scanning mechanism is preferably a part of the transmit optics and is for example a rotating mirror polygon, galvanometric mirrors, MEMS-mirrors, or an optical phased array. The redirection of the at least one primary laser beam enables a pattern to be scanned, giving an average intensity distribution over a time period and over an emission cone with the color of the primary laser beam. Said colored, in particular blue, emission cone is overlapped and compensated with regard to color by the at least one secondary light beam to achieve a mix color and a white perception.

A scanning mechanism which is adapted to redirect the at least one primary laser beam and the at least one secondary light beam allows to align the at least one primary laser beam and the at least one secondary light beam coaxially and to match the angular intensity of the beams accordingly, in particular with a laser source as secondary light source. Thus, the color of the at least one primary laser beam respectively the scanning beam of the lidar system can be advantageously mixed with the at least one secondary light beam being a laser beam, for example red and green or yellow. Preferably, the scanning mechanism is adapted to redirect the at least one primary laser beam and the at least one secondary beam in the same direction at each point in time.

In an advantageous embodiment it is proposed that the receive optics are incorporated into the transmit optics. In this way a co-axial system can be realized.

According to a further development, it is proposed that the sensor is a silicon photomultiplier/multi-pixel photon counter (SiPM/MPPC). Said sensor is very suitable due to the high gain in combination with a high photon detection efficiency for visible wavelengths, in particular for blue wavelengths. The higher gain of this sensor reduces the influence of electronic noise which results in a higher signal-to-noise ratio and better performance. It is further less temperature dependent than APDs and is therefore more robust. The lower bias voltage of said sensor enables less complex electronics. As a silicon photomultiplier/multi-pixel photon counter is sensitive for the whole visible range, the sensor could also be used for color estimation.

In an advantageous development, the lidar system is adapted to detect the spectral properties of scanned objects in the surrounding. This is possible due to the spectral characteristics of the mixture of the at least one primary laser beam with the at least one secondary light beam, in particular for secondary light beam being a laser beam. Preferably, the lidar system comprises at least two different sensors. Having more than one narrow spectrum of one laser enables the lidar system to determine the color or spectral properties of a scanned object. According to a further development, the receive optics comprise a bandpass for the primary spectral peak of the at least one primary light source. This limits the optical bandwidth of the receiver or sensor in order to reduce the influence of noise from other light sources than the primary light source such as sunlight, light from car headlights or street lighting, leading to a higher signal-to-noise ratio of the lidar system.

To solve the problem of the invention, a method to operate a lidar system according to any one of claims 1 to 14 is proposed, wherein the at least one primary light source, the at least one secondary light source and the transmit optics are operated such that the at least one primary laser beam and the at least one secondary light beam overlap and mix to a mix color when viewed from a sufficient distance to the motor vehicle.

In the following the invention shall be illustrated on the basis of preferred embodiments with reference to the accompanying drawings, wherein:
- Fig. 1: shows a lidar system with two LED as secondary light sources;
- Fig. 2: shows the spectral distribution of the primary laser beam and two LED secondary light beams;
- Fig. 3: shows a lidar system with one laser as secondary light source; and
- Fig. 4: shows a lidar system with two lasers as secondary light sources.

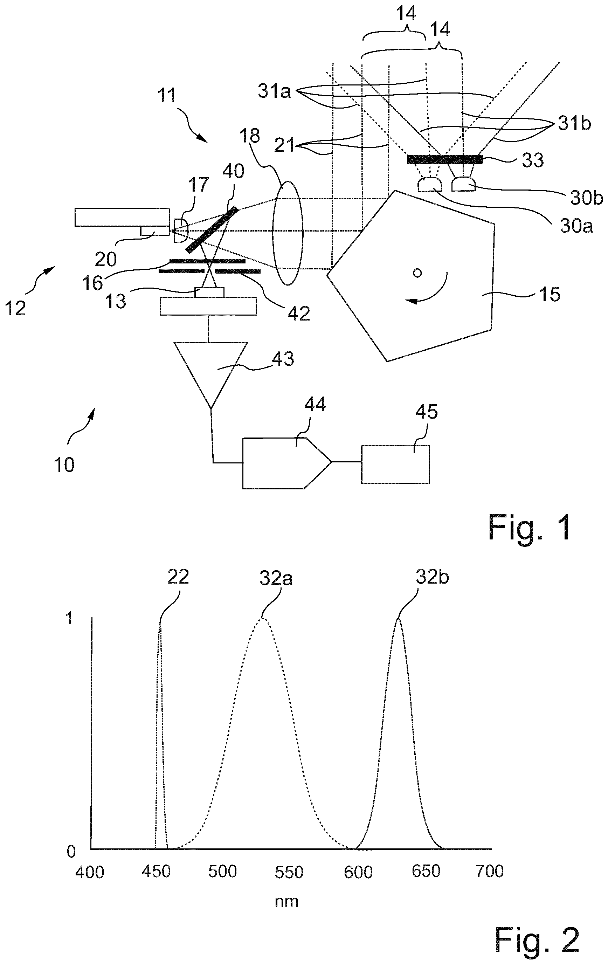

In Fig. 1 an advantageous embodiment of the proposed lidar system 10 is shown schematically. The lidar system 10 comprises an array of pulsed blue laser diodes as primary light source 20, which generates a primary laser beam 21 through the transmit optics 11 of the lidar system 10. The transmit optics 11 comprise a FAC lens 17 (Fast-Axis-Collimator) and a larger collimating lens 18. In preferred embodiments the collimation lens 18 is a collimating lens system. The primary laser beam 21 is directed to a scanning mechanism 15, which is a rotating mirror polygon with slightly different angles one each side towards the axis of rotation in this embodiment. The scanning mechanism 15 enables 2D-scanning of the surrounding by redirection of the primary laser beam 21 into a surrounding. Accordingly, the primary laser beam 21 emerges from the lidar system 10 into the surrounding through an optical window respectively a lens (not shown), which may form the outermost part of the lidar system 10 in this or in another advantageous embodiment. The primary laser beam 21 emerged from the lidar system 10 is visible since the primary light source is a blue laser diode array.

During operation of the lidar system 10 the primary laser beam 21 is quickly moved over the section to by scanned and the scan is performed at a high repetition rate. Being in the visible range of the human perception, the primary laser beam 21 would be seen as blue light, when scattered on particles in the air of the surrounding or on outer part of transmit optics 11, or reflected from an object in the surrounding. The blue primary laser beam 21 results in an improved signal-to-noise ratio due to increased detector responsivity for blue light.

As blue laser light may have advantages with regard to the limit of the beam power, it is also likely to confuse or distract other road users. Therefore, the lidar system 10 comprises two LEDs as secondary light sources 30, which are also working in the visible range. The left LED as secondary light source 30a generates a green secondary light beam 31a and the right LED as secondary light source 30b generates a red secondary light beam 31b in the example shown in Fig. 1. The secondary light beams 31a, 31b are directed through a light shaping element 33 in order to match the angular intensity and emission pattern of the scanning primary laser beam 21.

Further on, the primary laser beam 21 and the secondary light beams 31a, 31b emerge from the transmit optics 11 of the lidar system 10 at distance 14 which is small enough that the three beams 21, 31a, 31b are perceived as one beam or light source at the reasonable distance for the typical brightness levels. The distance 14 refers to the middle of the angular distribution of each emerging light and is preferably below 50 mm.

As the primary laser beam 21 and the secondary light beams 31a, 31b emerge from lidar system 10 in close proximity and overlap so that a viewer perceives the light as a mixture of the respective light beams 21, 31a, 31b having a mix color which is perceived as white in this case. The secondary light beams 31a, 31b for color balancing do not pass through the scanning optics respectively the scanning mechanism 15 in this embodiment.

The primary laser beam 21 and the secondary light beam 31a, 31b each have a different color in the visible range, wherein the primary laser beam 21 has a primary spectral peak 22 at 450 nm which is very narrow peak as shown in Fig. 2. The secondary light beams 31a, 31b have their respective intensity peaks or physically primary peaks, which are here referred as secondary spectral peaks 32a, 32b also in the visible range of the human eye, but with a much wider peak due to the LEDs as secondary light sources 30a, 30b. The green secondary light beam 31a has a secondary spectral peak 32a at appr. 530 nm and the red secondary light beam 31a has a secondary spectral peak 32b at appr. 630 nm. The spectral distribution of the primary light source 20 and the secondary light sources 30a, 30b illustration in Fig. 2 shows the normalized intensity over the wavelength. The mixture of these spectra results in a perception of white light for a human eye, which is represented e.g., by the color-mapping of the CIE 1931 Standard Observer. Accordingly, the color of blue primary laser beam 21 is compensated so that the light of the lidar system 10 appears white like any headlight of a motor vehicle.

The receive optics 12 which receive the reflected light from possible objects in the surrounding share some parts of the transmit optics 11 in this embodiment. The reflected light is redirected by the scanning mechanism 15 through the collimating lens 18. A polarizing beam-splitter 40 is provided in the optical path in the receive optics 12 redirecting the reflected light to a sensor 13 of the lidar system 10. The beam-splitter 40 separates the optical path of the sensor 13 from that of the primary light source 20 by means of e.g., polarization and/or geometrical properties.

Further on, an optical bandpass filter 16 matching the blue wavelength of the primary laser beam 21 and an optical mask 42, preferably consisting of several slits, are arranged in the optical path in front of the sensor 13. The bandpass filter 16 limits the optical bandwidth of the receiver resp. sensor 13 in order to reduce the influence of noise from other light sources than the primary light source 20 or the primary laser beam 21. The optical mask 42 also reduces the optical noise from other light sources such as sunlight or light from car headlights. The sensor 13 is an array of detector elements, in particular a silicon photomultiplier/multi-pixel photon counter (SiPM/MPPC).

The signals of the sensor 13 are amplified by a transimpedance amplifier 43, which may be omitted when the internal gain of the sensor 13 is high enough. Further, the signals are converted by an analog to digital converter 44 and processed by a processing unit 45. The processing unit 45 extracts useful information from the digital signal, such as range, amplitude and/or high-level features such as positions of stationary objects and moving vehicles.

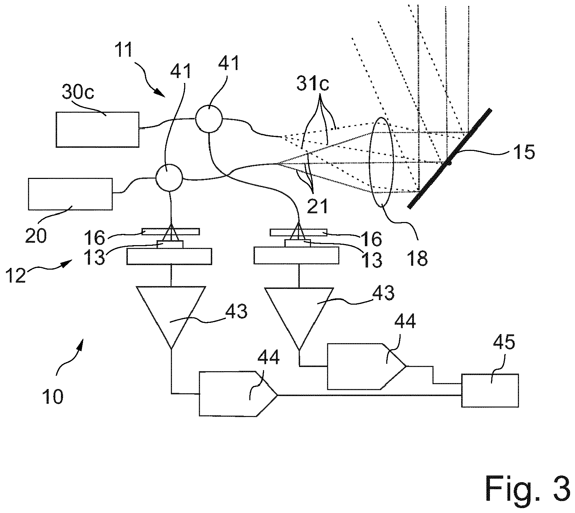

In Fig. 3 another embodiment is shown schematically, wherein a pulsed fiber laser in the visible range is the primary light source 20 generating the primary laser beam 21. The color of the primary laser beam 21 is compensated by secondary light source 30c generating a secondary light beam 31c which is an also a pulsed or continuous laser beam in this embodiment. The primary laser beam 21 is blue and has primary spectral peak at 450 nm and the secondary light beam 31c is yellow and has a secondary spectral peak at 570 nm. The mixture or mix color of said two spectral peaks with a small bandwidth each due to the laser characteristics is perceived as white light.

The transmit optics 11 and receive optics 12 comprise fiber optic circulators 41 and a collimating lens 18. The scanning mechanism 15 is a galvanometric mirror which redirects both the primary laser beam 21 and the secondary light beam 31c being a laser beam into the surrounding. Thus, the distance 14 between the primary laser beam 21 and the secondary light beam 31c is minimized to zero and the beams overlap in this embodiment. The angular intensities of these two beams are also very similar to one another as the laser beams, the primary laser beam 21 and the secondary light beam 31c, emerge from two separate fibers arranged in close proximity in the optical path before the collimating lens 18 and the scanning mechanism 15.

The embodiments illustrated in Fig. 1 and 3 are bidirectional systems. The reflected light is coupled into the respective optical fibers from which the primary laser beam 21 and secondary light beam 31c emerge as illustrated in Fig. 3. The reflected light is redirected by the optical circulators 41 onto two separate sensors 13 after passing two bandpass filters 16, respectively. The signals of the two sensors 13 therefore detect each the reflected light corresponding to the reflection of the primary laser beams 21 and the secondary light beam 21. A dedicated optical mask 42 can be omitted in this embodiment. The signals are prepared by amplifiers 43, e.g., trans impedance amplifiers and an analog to digital converter 44. The signals are then processed by a common processing unit 45. The lidar system 10 according to this embodiment allows for a further improved signal-to-noise ratio as the secondary light beam 31c for compensating the color of the primary laser beam 21 can be operated as a second lidar in the lidar system 10. Further on, spectral properties of scanned objects can be determined as signals for two different spectral peaks 22, 32 are available for color estimation. Therefore, the processing unit 45 of the lidar system 10 is able to extract color information for detected objects.

In an alternative embodiment, two secondary light sources 31 being laser sources, e.g., green and red, can be comprised by the lidar system 10 instead of only one secondary light source 31 as a laser source.

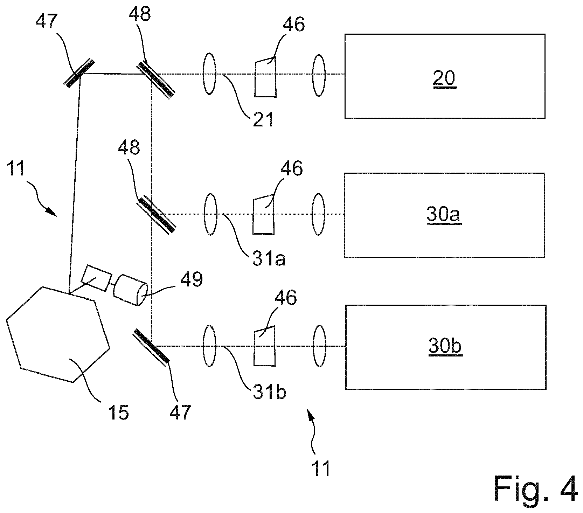

In a third embodiment a one directional lidar system 10 with transmit optics 11 is shown schematically in Fig. 4, wherein the receive optics 12 are not shown. The receive optics 12 and the sensor 13 and the electronics such as the processing unit 45 of the lidar system 10 are arranged separately in this embodiment. The lidar system 10 comprises a diode pumped solid state (DPSS) laser as the primary light source 20 which generates a primary laser beam 21 having the primary spectral peak at 457 nm. The primary laser beam 21 is therefore perceived as blue. In order to compensate the blue color of the primary laser beam 21 the lidar system 10 comprises two secondary light sources 30a, 30b, wherein the secondary light source 30a in the middle of Fig. 4 is a green DPSS laser generating a secondary light beam 31a as a laser beam with a wavelength of 532 nm. The secondary light source 30b at the bottom in Fig. 4 is as red diode laser generating a laser beam with a wavelength of 648 nm.

The primary laser beam 21 and both secondary light beams 31a, 31b being laser beam are guided in the transmit optics 11 of the lidar system 10, wherein an acousto-optic modulator 46 (AOM) is in the optical path of each beam. The red secondary light beam 31b is reflected by a high reflective mirror 47 towards a first dichroic mirror 48. Said first dichroic mirror 48 couples the green secondary light beam 31a into the optical path of the red secondary light beam 31b, so that both laser beams are aligned. A second dichroic mirror 48 is used to couple the blue primary laser beam 21 into the optical path of the two aligned secondary light beams 31a, 31b. As a result, a common overlapped laser beam having three distinct and small spectral peaks in blue, green and red is generated. Thus, the beam is perceived as white light by the human eye.

Said common beam of the primary laser beam 21 and the two secondary light beam 31a, 31b being laser beams are directed to a scanning mechanism 15, in this embodiment a rotating mirror polygon with slightly different angles one each side towards the axis of rotation. The primary laser beam 21 and the two secondary light beam 31a, 31b being laser beams emerge from the transmit optics 11 through an optical window 49 as exit position of the lidar system 10. As the three beams are optically aligned, there is essentially no distance between the primary laser beam 21 and the secondary light beams 31a, 31b. Accordingly, the perception of the common beam that is used to scan the surrounding is perceived as a single and white light source.

The sensor and/or processing unit are adapted the determine the Time-of-Flight of received reflected light from objects in the surrounding illuminated by the primary laser beam, which is preferably pulsed, in order to achieve a depth information.

In a possible embodiment of the lidar system 10 still or moving color images could be projected into the surrounding of a motor vehicle and used for communication with other road users or for entertainment purposes.

## Claims

1. A lidar system (10) for a motor vehicle, comprising
- at least one primary light source (20) adapted to generate at least one primary laser beam (21),
- transmit optics (11) adapted to emit the at least one primary laser beam (21) into a surrounding of the motor vehicle,
- receive optics (12) adapted to receive a reflected portion of the at least one primary laser beam, and
- a sensor (13) adapted to detect the light portion received by the receive optics (12),
**characterized in that** the primary laser beam (21) has a primary spectral peak (22) in the visible spectrum and the lidar system (10) further comprises
- at least one secondary light source (30) adapted to generate at least one secondary light beam (31) having at least one secondary spectral peak (32) in the visible spectrum which is different from the primary spectral peak (22), wherein
- the transmit optics (11) are adapted to emit the at least one secondary light beam (31) into the surrounding of the motor vehicle, wherein
- the at least one primary light source (20), the at least one secondary light source (30) and the transmit optics (11) are arranged such that the at least one primary laser beam (21) and the at least one secondary light beam (31) overlap and mix to a mix color when viewed from a sufficient distance to the motor vehicle.

2. The lidar system (10) according to claim 1, wherein
- the mix color is perceived as white light by a human eye with regard to chromaticity.

3. The lidar system (10) according to claim 1 or 2, wherein
- the at least one primary light source (20), the at least one secondary light source (30) and the transmit optics (11) are arranged such that the at least one primary laser beam (21) and the at least one secondary light beam (31) have a distance (14) smaller than 50 mm to each other at the exit position of the transmit optics (11).

4. The lidar system (10) according to any one of the preceding claims, wherein
- the at least one primary the light source (20) is adapted to generate a blue laser beam (21), preferably with a primary spectral peak (22) in the wavelength range of 380 nm to 480 nm.

5. The lidar system (10) according to any one of the preceding claims, wherein
- at least one secondary light source (30a) is adapted to generate a green secondary light beam (31a), preferably with secondary spectral peak (32a) in the wavelength range of 490 nm to 570 nm, and/or
- at least one secondary light source (30b) is adapted to generate a red secondary light beam (31b), preferably with a secondary spectral peak (32b) in the wavelength range of 590 nm to 700 nm.

6. The lidar system (10) according to any one of the preceding claims, wherein
- at least one secondary light source (30c) is adapted to generate a yellow secondary light beam (31), preferably with a secondary spectral peak in the wavelength range of 570 nm to 590 nm.

7. The lidar system (10) according to any one of the preceding claims, wherein
- the at least one secondary light source (30) is a LED and/or a laser source.

8. The lidar system (10) according to any one of the preceding claims, comprising
- a light shaping element (33) arranged in the optical path of the at least one secondary light beam (31).

9. The lidar system (10) according to any one of the preceding claims, wherein
- the at least one primary laser beam (21) and the at least one secondary light beam (31) have a similar, preferably the same, angular intensity.

10. The lidar system (10) according to any one of the preceding claims, wherein
- the transmit optics (11) are adapted to emit the at least one primary laser beam (21) and the at least one secondary light beam (31) through different parts of the transmit optics (11).

11. The lidar system (10) according to any one of the preceding claims, wherein
- the lidar system (10) comprises a scanning mechanism (15) which is adapted to redirect the at least one primary laser beam (21) and/or the at least one secondary light beam (31).

12. The lidar system (10) according to any one of the preceding claims, wherein
- the sensor (13) is a silicon photomultiplier/multipixel photon counter (SiPM/MPPC).

13. The lidar system (10) according to any one of the preceding claims, wherein
- the lidar system (10) is adapted to detect the spectral properties of scanned objects in the surrounding.

14. The lidar system (10) according to any one of preceding claims, wherein
- the receive optics (12) comprise a bandpass (16) for the primary spectral peak (22) of the at least one light source (20).

15. Method to operate a lidar system (10) according to any one of the preceding claims, **characterized in that** the at least one primary light source (20), the at least one secondary light source (30) and the transmit optics (11) are operated such that the at least one primary laser beam (21) and the at least one secondary light beam (31) overlap and mix to a mix color when viewed from a sufficient distance to the motor vehicle.
